Europäisches Patentamt

**European Patent Office**

**Office européen des brevets**

(11) Veröffentlichungsnummer: **0 200 895
B1**

(12) **EUROPÄISCHE PATENTSCHRIFT**

(45) Veröffentlichungstag der Patentschrift:
20.09.89

(51) Int. Cl.⁴: **F16K 11/074**, F16K 31/58

(21) Anmeldenummer: 86103761.2

(22) Anmeldetag: 19.03.86

(54) Verfahren und Vorrichtung zur Betätigung von Wasserarmaturen.

(30) Priorität: 26.03.85 DE 3510930
02.05.85 DE 3515758
15.05.85 DE 3517565

(43) Veröffentlichungstag der Anmeldung:
17.12.86 Patentblatt 86/46

(45) Bekanntmachung des Hinweises auf die Patenterteilung:
20.09.89 Patentblatt 89/38

(84) Benannte Vertragsstaaten:
AT BE CH DE FR GB IT LI LU NL SE

(56) Entgegenhaltungen:
EP-A- 0 117 199
DE-B- 1 007 255
US-A- 2 576 414
US-A- 2 623 752
US-A- 2 850 041
US-A- 3 468 343

(73) Patentinhaber: Holzer, Walter, Senator h.c. Dr.h.c.Ing.,
Drosteweg 19, D-7758 Meersburg(DE)

(72) Erfinder: Holzer, Walter, Senator h.c. Dr.h.c.Ing.,
Drosteweg 19, D-7758 Meersburg(DE)

(74) Vertreter: Riebling, Peter, Dr.-Ing., Patentanwalt
Rennerle 10 Postfach 31 60, D-8990 Lindau/B.(DE)

ACTORUM AG

## Beschreibung

Die Erfindung betrifft eine Wasserarmatur mit einem schwenkbaren Wasserauslauf zur Regelung der Wassermenge und der Wassertemperatur nach dem Oberbegriff des Patentanspruchs 1.

Wasserarmaturen dienen dazu Kalt- und Warmwasserzuleitungen nach Bedarf zu öffnen und zu schließen. Mischarmaturen gestatten das Mischen von Kalt- und Warmwasser, mit dem Ziel, Wasser mit einer bestimmten Mischtemperatur zu erhalten. Mischarmaturen mit Thermostatenregelung halten die voreingestellte Temperatur konstant, weitgehend unabhängig von Druckschwankungen in der Wasserversorgung und Temperaturänderungen in der Warmwasserversorgung.

Eine Wasserarmatur der eingangs genannten Art ist bereits aus der US-A 3 468 343 bekannt. Bei dieser bekannten Einrichtung wirkt der verschwenk- und kippbare Wasserauslauf über ein Stellglied auf einen Stößel, der in Kombination gedreht oder angehoben oder abgesenkt wird. Nachteilig hierbei kann wegen der direkten Einwirkung der Bewegung des Wasserauslaufes auf den Stößel letzterer nicht sonderlich feinfühlig bedient werden, so daß die Handhabung erschwert verlaufen könnte.

Im weiteren grenzen nachteilig die Dichtflächen des Stößels als Regelglied direkt an den Auslauf an, wodurch Undichtigkeiten befürchtet werden müßten, wodurch die Betriebssicherheit leiden könnte.

Aufgabe der Erfindung ist es eine Wasserarmatur der genannten Art so weiterzubilden, daß bei dichter Anordnung der Teile eine feinfühlige, betriebsichere Bedienung gewährleistet ist bei besonders leichter Handhabung.

Zur Lösung der Aufgabe sind die Merkmale des kennzeichnenden Teils des Patentanspruchs 1 vorgesehen.

Das Wesen der Erfindung liegt darin, daß zwischen dem Stellglied ausgehend von dem schwenkbaren Wasserauslauf und dem Regelglied ein Kardangelenk zwischengeschaltet ist. Hierdurch wird bei sicherer Anordnung eine besonders feinfühlige Regelung und leichte Handhabung der Wasserarmatur erreicht.

Eine Kombination beider Schwenkbewegungen um eine vertikale und horizontale Achse gestattet, sowohl die Wassermenge als auch die Mischtemperatur des Wassers einzustellen. Auch hier ist von großem Vorteil, daß die Bedienungswege am Ende des langen Wasserauslaufs eine feinfühlige und genaue Einstellung ermöglichen.

In Verbindung mit Keramikscheiben ergibt sich eine äußerst zuverlässige Ausbildung der Regelelemente.

Besondere Bedeutung kommt zunächst der kinematischen Anordnung zu, die Schwenkbewegung des Wasserauslaufs um zwei Achsen, in eine Drehung und eine Parallelverschiebung der planebenen Regelflächen der Teile gegeneinander umwandelt. Hierzu ist es vorgesehen ein Übertragungsteil formschlüssig oder fest mit bei der Schwenkbewegung des Wasserauslaufs zu verbinden, wobei dann ausgehend von einer Gabel innerhalb des Kardangelenks die Drehung des Regelteiles über das Übertragungsglied eingeleitet wird.

Da die Bewegungen einerseits im Raum um zwei Achsen, andererseits in der Ebene als Verschiebung und/oder Drehung ablaufen, ist es vorgesehen mit dem Übertragungsteil ein Kardangelenk zu verwenden, das um zwei aufeinander senkrecht stehende Achsen nach Belieben drehbar ist.

Zusätzlich wird vorgeschlagen, eine der Achsen des Kardangelenks parallel z.B. zur Schwenkachse, welche die auslaufende Wassermenge bestimmt, anzuordnen, allerdings nicht mit dieser zusammenfallend, sondern mit einem bestimmten Achsabstand, der als Hebelarm zur Verschiebung der Teile zueinander dient.

Hierdurch wird ausgehend von dem Kardangelenk ein besonders leichtes Verkippen über den zusätzlichen Hebelarm erreicht, wobei hier die Parallelverschiebung der einen Regelscheibe auf der anderen besonders feinfühlig vorgenommen werden kann.

Vorteilhaft ist die Lagerung einer etwa halbkugelförmigen Dichtungsfläche in einem Führungsgehäuse, das einen Schlitz besitzt, aus dem ein Verbindungsstück als Stellglied herausragt, welches die Verbindung zum Wasserauslauf herstellt. Der Wasserauslauf ist dabei fest oder formschlüssig über das Verbindungsstück mit der Dichtungsfläche verbunden und kann mit diesen Teilen um die Schwenkachse geschwenkt werden.

Um das Eindringen von Schmutz und Fremdkörpern in den Schlitz zu verhindern, aber auch aus Designgründen, wird geraten, den Schlitz ganz oder zumindest teilweise mit einer Abdeckung zu verschließen.

Für die konstruktive Ausbildung einer erfindungsgemäßen Wasserarmatur sind zwei Merkmale von besonderer Bedeutung, da sie die Abmessungen und damit die Einfachheit des Aufbaus wesentlich begünstigen.

Zunächst ist es möglich, zumindest einen Teil des Kardangelenks innerhalb der halbkugelförmigen Dichtungsfläche anzuordnen. Damit ergibt sich eine kompakte Unterbringung der einzelnen Teile, aber auch eine geschützte und raumsparende, d.h. kostensparende Lösung.

Die zweite wesentliche Verbesserung des gesamten Aufbaus besteht darin, die Hauptachse der Wasserarmatur nicht vertikal sondern etwas schräg gestellt anzuordnen, nämlich etwa um den halben Schwenkwinkel des Wasserauslaufs. Das bedeutet zunächst, daß das Verbindungsstück in einer Endstellung (voll aufgedreht) etwa vertikal steht und damit in dieser Stellung bequem die Temperatureinstellung durch Schwenken, um diese nunmehr auch vertikale Achse vorgenommen werden kann.

Die Schräglage der Hauptachse um den halben Schwenkwinkel bewirkt aber auch, daß der Schlitz im Führungsgehäuse symmetrisch liegt, was die Unterbringung aller Teile im Innenraum sehr begünstigt. Überdies sieht die Schräglage sehr vorteilhaft aus.

Besondere Bedeutung kommt auch der Möglichkeit zu, bestimmte Lagen bzw. Positionen des Wasserauslaufes durch Rastungen zu kennzeichnen.

Die Schwenkbewegung könnte dann z.B. zunächst in einer Stellung "Kalt" und dann in einer Stellung "Warm" einrasten, um schließlich in die Endstellung "Heiß" zu gelangen.

Das gleiche würde z.B. bei einer Kombination von zwei Schwenkungen gelten, wo auch die Wassermenge mit Rastungen "klein", "mittel" und "groß" leicht einstellbar ist. Die Rastungen behindern natürlich keineswegs die Möglichkeit, auch Zwischenwerte einstellen zu können. Eine besonders vorteilhafte Anordnung der Regelelemente mit planebenen Dichtungsflächen, z.B. aus Keramik, ist gegeben, wenn die Ebene der Dichtungsflächen etwa senkrecht zur Schwenkachse des Wasserauslaufs steht. Kleine Abweichungen von der exakten senkrechten Stellung, die u.U. aus Formgestaltungsgründen zweckmäßig sein können, sind ohne Bedeutung, da sie leicht durch die meist erforderlichen Übertragungselemente ausgeglichen werden können.

Diese Anordnung ermöglicht auch die Verdrehung von einem der beweglichen Teile, z.B. um die Schwenkachse des Wasserauslaufs und die Koppelung dieser beiden Bewegungen.

Durch die Kombination der beiden vorgenannten Anordnungen ist es möglich, mit einem einzigen Übertragungselement die beiden Schwenkbewegungen des Wasserauslaufs z.B. um eine etwa horizontal liegende Achse und um eine dazu etwa senkrechtstehende zweite Achse einmal in eine Drehung und einmal in eine Parallelverschiebung des beweglichen Teiles umzusetzen.

Die angestrebte Wirkung besteht darin, z.B. die Wassermenge durch Schwenken des Wasserauslaufs um eine horizontale Achse einzustellen, bzw. abzudrehen und durch Schwenken des Wasserauslaufs um eine zweite Achse, die zur Achse senkrecht steht, die Mischtemperatur von Warm- und Kalt-Wasser, durch Querschnittsveränderungen in der Überdeckung der Öffnungen und bzw. der Öffnungen herbeizuführen.

Eine weitere Verbesserung des Erfindungsgedankens besteht in der Ausführung einer derartigen Vorrichtung mit einem Freiwinkel zwischen der Bewegung des Wasserauslaufs und der damit gekoppelten Bewegung des beweglichen Teils.

Zweck einer solchen Maßnahme ist der Wunsch, beim Einstellen der Mischtemperatur durch seitliches Schwenken des Wasserauslaufs um die Achse, im Bereich des Freiwinkels die Möglichkeit zu haben, den Wasserstrahl z.B. im Waschbecken hin und herbewegen zu können, ohne sofort eine Temperaturänderung zu verursachen.

Für bestimmte Funktionen, wie z.B. einer "Spareinstellung" des Wasserauslaufs, wird erfindungsgemäß vorgeschlagen, eine Federrast vorzusehen, die nur mit einem zusätzlichen Kraftaufwand überfahren werden kann.

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:

Figur 1: Schnitt durch eine Wasserarmatur mit Keramikscheiben als Regelelement mit einem Kardangelenk;

Figur 2: Teilschnitt durch den Wasserauslauf der Wasserarmatur nach Fig. 1 mit eingestecktem Verbindungsstück;

Figur 3: Schnitt durch die Wasserarmatur nach Fig. 1 im geschlossenen Zustand;

Figur 4-7: schematisiert die Darstellung verschiedener Regelstellungen.

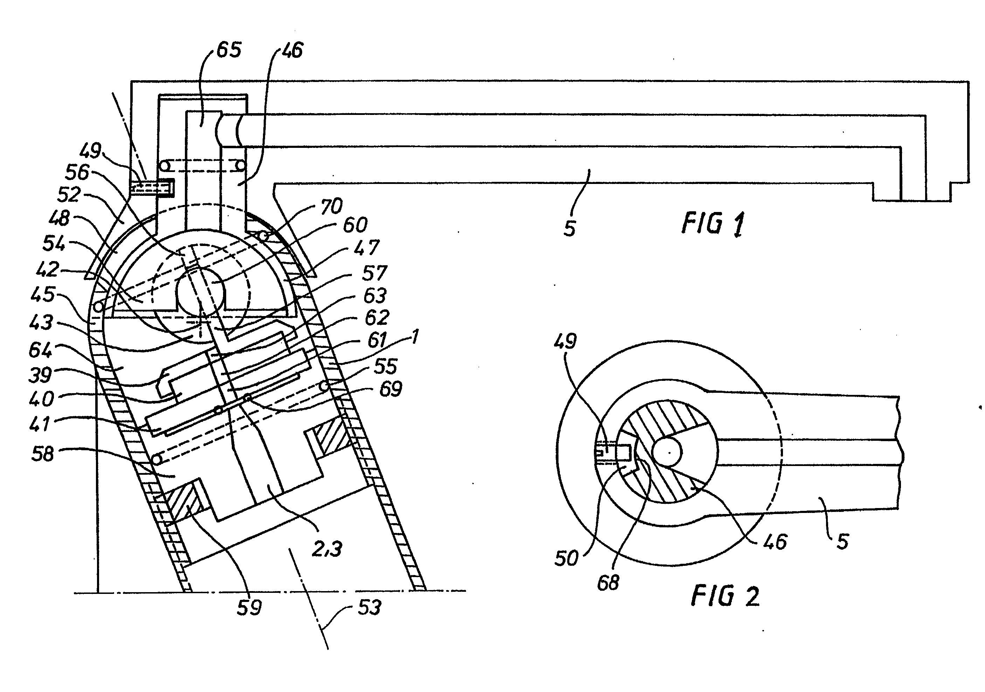

Figur 1 zeigt eine beispielsweise, schematische Skizze einer Wasserarmatur mit Keramikscheiben (40, 41) als Regelelemente und einem Verbindungsstück zum Wasserauslauf (5) als Stellelement (46).

In Fig. 1 wurde der Ventilkörper (1) als ein zylindrisches Rohr, welches in einem kugelförmigen Führungsgehäuse (45) ausläuft, dargestellt. Die Kalt- und Warmwasserzuleitungen (2 und 3) überdecken sich in der Fig. 1, da sie hintereinander liegen. Der Wasserauslauf (5) ist über ein Verbindungsstück als Stellelement (46) mit der etwa halbkugelförmigen Dichtungsfläche (47) formschlüssig verbunden. Das Führungsgehäuse (45) besitzt einen Schlitz (48), in dem das Verbindungsstück (46) eine Schwenkbewegung um die Schwenkachse (42) ausführen kann. Der O-Ring (70) dichtet elastisch.

In der halbkugelförmigen Dichtungsfläche (47) ist eine Wand (54) vorgesehen, welche die Verschiebeachse (60) des Kardangelenks (43) umgreift. Im Kardanschlitz (56) wird die Gabel (57) des Übertragungsteiles (39) geführt. Die Gabel (57) überträgt alle Verschiebe- und Drehbewegungen des Kardangelenks (43) auf das verschiebbare Teil (40). Das Teil (41) ist fest in der Halterung (58) eingesetzt. Die Halterung (58) ist in den Ventilkörper (1) eingeschoben und wird z.B. durch einen Schraubring (59) fixiert. Der O-Ring (55) sorgt für eine Abdichtung der Halterung (58).

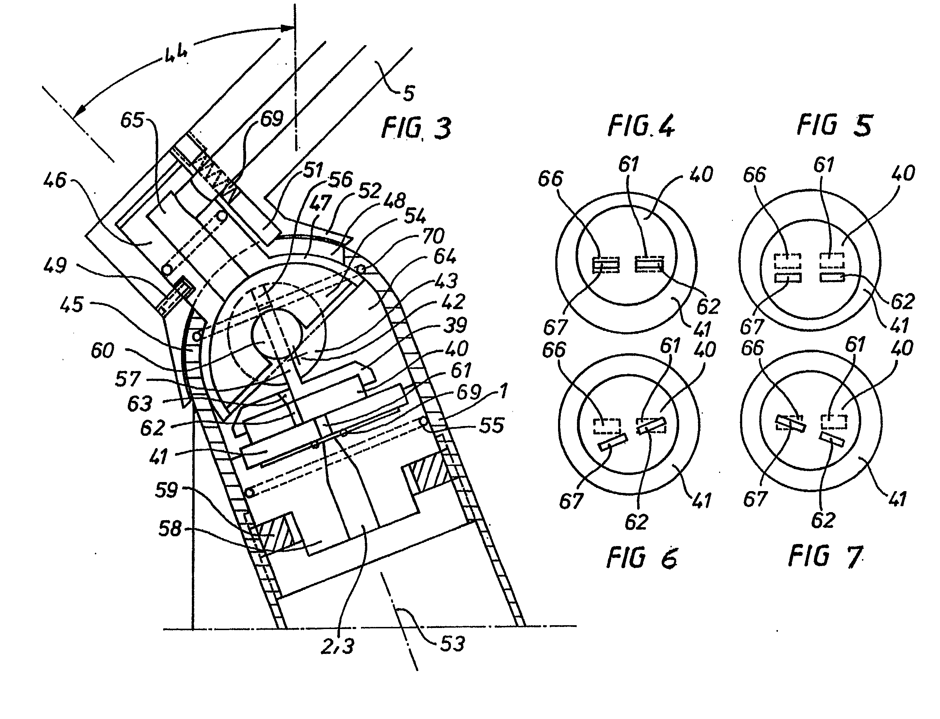

In Fig. 1 ist der geöffnete Zustand der Armatur dargestellt in bezug auf die Keramikscheiben (40, 41). In diesem Fall fluchtet die Öffnung (61) im festen Teil (41) nach Fig. 4 mit der Öffnung (62) im verschiebbaren Teil (40). Das Wasser kann z.B. von der Zuleitung 2 durch die Öffnung (61, 60, 62) im Übertragungsteil (39) in den Mischraum (64) einströmen und zu beiden Seiten der Wand (54) in die Bohrung (65) des Verbindungsstücks (46) und schließlich in den Wasserauslauf (5) gelangen. Wichtig sind die O-Ringe (69) zur Abdichtung.

In Fig. 3 ist die Armatur in geschlossenem Zustand dargestellt wo die Scheiben (40, 41) gegeneinander verdreht und verschoben sind. Der Wasserauslauf (5) ist hochgeschwenkt und mit ihm das Verbindungsstück bzw. Stellelement (46), die Dichtungsfläche (47) und die Wand (54) nach Fig. 1. Die Verschiebeachse (60) und mit ihr die Gabel (57) mit Übertragungsteil (39) und dem verschiebbaren Teil (40) sind gegenüber dem Teil (41) versetzt bzw. verschoben und die Öffnungen (61 und 62) nach Fig. 4 fluchten nicht mehr. Der Wasserdurchlauf ist geschlossen.

In den Figuren 4–7 sind schematisch die verschiedenen Regelstellungen der verschiebbaren Teile (40, 41) gezeigt. Zur vereinfachten Darstellung sind die Öffnungen (61 und 62) als schmale Rechtecke gezeichnet. Die Öffnungen (61 und 62) sind für Kaltwasser und die Öffnungen (66 und 67) für Warmwasser.

Figur 4 zeigt beide Durchgänge geöffnet, somit lauwarmes Wasser.
Figur 5 zeigt beide Durchgänge geschlossen, somit kein Durchfluß.
Figur 6 zeigt nur die Öffnungen (61 und 62) fluchtend, somit kaltes Wasser.
Figur 7 zeigt nur die Öffnungen (66 und 67) fluchtend, somit warmes Wasser.

Die Zwischenstellungen entsprechen dann den unterschiedlichen Wassermengen bzw. den verschiedenen Mischtemperaturen. Durch andere Formen und Lagen der Öffnungen (61 und 62 bzw. 66 und 67) ist eine weitgehende Optimierung und Anpassung möglich, wie sie in zahlreichen Anwendungen und Keramikscheiben bereits ausgeführt ist.

In Fig. 1 und 3 ist schematisch die Anordnung einer Abdeckung (52) zum Schutz des Schlitzes (48) gegen Verschmutzung und Fremdkörper gezeigt. In diesem Beispiel ist die Abdeckung (52) direkt ein Teil des Wasserauslaufs (5), sie könnte jedoch ebenso als Zwischenstück ausgebildet sein, das z.B. auf dem Verbindungsstück (46) aufgeschoben wird. Vereinfacht wird die Anbringung einer derartigen Abdeckung durch die Tatsache, daß die äußere Form der Armatur eine Kugelfläche ist und daher die Abdeckung allen Schwenk- und Drehbewegungen folgen kann.

In Fig. 1 und 2 ist auch die Anordnung eines Freiwinkels (50) zwischen dem Wasserauslauf (5) und dem Verbindungsstück als Ausführungsbeispiel gezeigt. Die Schnittzeichnung Fig. 2 zeigt den Wasserauslauf (5) mit eingestecktem Verbindungsstück (46), welches eine Segmentnut (68) aufweist, in der die als Mitnehmer (49) vorgesehene Schraube mit einem Freiwinkel (50) frei drehbar ist, bevor sie formschlüssig das Verbindungsstück (46) mitnimmt.

In Fig. 3 ist schematisch die Anordnung einer Federrast (51) gezeigt, die im Bereich des Schlitzes (48) frei ist, aber vor Erreichen der Endstellung an der Kante des Schlitzes (48) ausläuft. Je nach Stärke der Feder (69) kann man die Kraft, die zum Überfahren der Rastung notwendig ist, einstellen. Diese "Sparstellung" ist neu und wird sehr geschätzt. Auch dieses Beispiel ist nur schematisch zu verstehen und viele andere brauchbare Lösungen sind möglich.

In Fig. 1 und 2 sind auch die Vorteile einer Neigung der Hauptachse (53) etwa um den halben Schwenkwinkel (44) klar zu erkennen. Zunächst ist in Fig. 1 bei ganz geöffneter Einstellung die Achse des Verbindungsstückes (46) etwa vertikal und der Wasserauslauf wird in einer etwa horizontalen Ebene verschwenkt, was wesentlich zur Bedienungsfreundlichkeit beiträgt. Dabei sind alle Innenteile symmetrisch zur Hauptachse (53), insbesondere der Schlitz (48), der auch die Lage der Abdeckung (52) und des O-Ringes (70) bestimmt. Eine Menge weiterer Vorteile sind den dargestellten Ausführungsbeispielen direkt zu entnehmen.

Die Funktion des Kardangelenks (43) beruht darauf, das ein Teil (40) als Keramikscheibe sowohl verdreht als auch verschoben werden kann und zwar in bezug auf Öffnungen (61, 62, 66, 67) für den Kalt- bzw. Warmwasserdurchlaß. Wird der Wasserauslauf (5) in horizontaler Ebene verschwenkt, so wird das Teil (40) lediglich verdreht, was einer Wassermengenregulierung entspricht.

Wird der Wasserauslauf (5) angekippt, so wird das Teil (40) als Keramikscheibe auf der anderen feststehenden Keramikscheibe (41) verschoben, was einer Temperaturregelung entspricht. Das Verschwenken und das Ankippen des Wasserauslaufs (5) mit der Temperatur bzw. Mengenregelung kann hierbei kombiniert werden. Beim Ankippen des Wasserauslaufs (5) entsprechend einer Verschiebung des Teiles (40) in eine Stellung nach Fig. 3 liegt die Kippbewegung des Kardangelenks außerhalb einer Schwenkachse (42), die durch den Wasserauslauf (5) über das Stellelement (46) bestimmt wird. Hierdurch entsteht ein Hebelarm, wodurch das Teil (40) nach Fig. 3 beim Hochkippen des Wasserauslaufs an den Rand der feststehenden anderen Keramikscheibe (41) verschoben wird und umgekehrt entsprechend einer Temperaturregelung.

Beim Verdrehen des Wasserauslaufes (5) wird das Teil (40) entsprechend einer Mengenregulierung ebenfalls verdreht, weil das Teil (40) über das Übertragungsteil (39) in Verbindung mit der Gabel (57) innerhalb des Kardangelenks (43) verdreht wird. Beim Ankippen des Wasserauslaufes (5) entsprechend einer Temperaturregelung wird die Gabel (57) im Kardangelenk (43) nicht verdreht, sondern verschwenkt, wodurch das Teil (40) nach Art einer abknickenden Bewegung verschoben wird.

**Patentansprüche**

1. Wasserarmatur mit einem schwenkbaren Wasserauslauf zur Regelung der Wassermenge und der Wassertemperatur mit wenigstens zwei Wasserzuleitungen (2, 3) für Kaltwasser bzw. für Heißwasser, einem Ventilkörper (1) und einem verschwenkbaren Stellelement (46), das zur Einstellung der von der Armatur abgegebenen Wassermenge bzw. Wassertemperatur in zwei voneinander unabhängigen Freiheitsgraden mittels des Wasserauslaufes verschwenkbar ist, dadurch gekennzeichnet, daß das Stellelement (46) mit einem Kardangelenk verbunden ist, das um zwei senkrecht aufeinanderstehende Achsen drehbar bzw. verschwenkbar ist, wobei das Stellelement (46) über das Kardangelenk (43) mindestens zwei mit planebenen Dichtungsflächen gegeneinander bewegliche Teile (40, 41) aus Keramik mit Wasserdurchlässen verdreht bzw. parallel verschiebt, wobei die Teile (40, 41) mit den Bewegungen des Wasserauslaufes (5) kinematisch über das Kardangelenk (43) gekoppelt sind.

2. Wasserarmatur nach Anspruch 1, dadurch gekennzeichnet, daß eine der Achsen des Kardangelenks (43) parallel zu einer Schwenkachse (42) des Wasserauslaufes (5) ist, aber nicht mit ihr zusammenfällt.

3. Wasserarmatur nach Anspruch 1, dadurch gekennzeichnet, daß die Ebene der Dichtungsflächen der Teile (40, 41) (Keramikscheiben) senkrecht zu einer der Schwenkachsen (42) des Wasserauslaufes steht.

4. Wasserarmatur nach Anspruch 1, dadurch gekennzeichnet, daß eines der beiden Teile (40 oder 41) um die Schwenkachse (42) des Wasserauslaufes (5) und mit diesem gekoppelt verdrehbar ist.

5. Wasserarmatur nach Anspruch 1, dadurch gekennzeichnet, daß der Wasserauslauf (5) über ein Stellelement (46) fest oder formschlüssig mit einer etwa halbkugelförmigen Dichtungsfläche (47) verbunden ist, die von einem Führungsgehäuse (45) umschlossen wird, wobei das Stellelement (46) in einem Schlitz (48) des Führungsgehäuses (45) und die Schwenkachse (42) geschwenkt werden kann.

6. Wasserarmatur nach Anspruch 1, dadurch gekennzeichnet, daß zumindest ein Teil des Kardangelenkes (42) innerhalb der halbkugelförmigen Dichtungsfläche (47) angeordnet ist.

7. Wasserarmatur nach Anspruch 1, dadurch gekennzeichnet, daß eine Abdeckung (52) vorhanden ist, die den Schlitz (48) ganz oder teilweise abdeckt.

8. Wasserarmatur nach Anspruch 1, dadurch gekennzeichnet, daß zwischen dem Wasserauslauf (5) und den verschiebbaren Teilen (40, 41) mindestens ein Mitnehmer (49) mit einem Freiwinkel (50) angeordnet ist.

9. Wasserarmatur nach den vorhergehenden Ansprüchen 1–8, dadurch gekennzeichnet, daß eine überfahrbare Federrast (51) im Bereich desjenigen Schwenkwinkels (44) vorhanden ist, der die Wassermenge bestimmt.

## Claims

1. A water fitting comprising a pivotable water outlet, for controlling the volume of water and the water temperature, having at least two water supply ducts (2, 3) for cold and hot water respectively, a valve body (1) and a pivotally displaceable setting element (46) which is pivotally displaceable with two mutually independent degrees of freedom by means of the water outlet, for adjustment of the volume of water delivered by the fitting and of the water temperature, respectively, characterized in that the setting element (46) is coupled to a cardan joint which is rotatable or pivotally displaceable around two mutually perpendicular axes, wherein the setting element (46) via the cardan joint (43) causes a rotary or parallel displacement of at least two members (40, 41) of ceramics material which are movable one against another with smooth planar sealing surfaces, the members (40, 41) being kinematically linked to the displacements of the water outlet (5) via the cardan joint (43).

2. A water fitting according to Claim 1, characterized in that one of the axes of the cardan joint (43) is parallel to a pivoting axis (42) of the water outlet (5) but does not coincide with it.

3. A water fitting according to Claim 1, characterized in that the plane of the sealing surfaces of the members (40, 41) (ceramics plates) extends at right angles to one of the pivot axes (42) of the water outlet.

4. A water fitting according to Claim 1, characterized in that one of the two members (40 or 41) is rotatable around the pivot axis (42) of the water outlet (5) and is coupled thereto.

5. A water fitting according to Claim 1, characterized in that the water outlet (5) is connected in a solid or form locked manner via a setting element (46) to an approximately hemispherical sealing surface (47) which is enclosed by a guide housing (45), the setting element (46) being pivotable in a slot (48) of the guide housing (45) and around the pivot axis (42).

6. A water fitting according to Claim 1, characterized in that at least a part of the cardan joint (42) is situated within the hemispherical sealing surface (47).

7. A water fitting according to Claim 1, characterized in that a cover (52) is present, which wholly or partially covers the slot (48).

8. A water fitting according to Claim 1, characterized in that at least one engaging member (49) is situated with a clearance angle (50) between the water outlet (5) and the displaceable members (40, 41).

9. A water fitting according to the preceding claims 1 to 8, characterized in that an overridable spring catch (51) is present in the region of the pivoting angle (44) which determines the volume of water.

## Revendications

1. Robinet d'eau présentant un bec d'écoulement de l'eau orientable pour le réglage du débit et de la température de l'eau, ainsi qu'au moins deux conduits d'arrivée d'eau (2, 3) pour l'eau froide et respectivement l'eau chaude, un corps de vanne (1) et un élément de réglage pivotant (46), qui peut être orienté suivant deux degrés de liberté indépendants l'un de l'autre, au moyen du bec d'écoulement de l'eau, pour le réglage du débit d'eau fourni par le robinet et respectivement de la température de l'eau, caractérisé en ce que l'élément de réglage (46) est relié à un joint universel, qui est mobile en rotation ou peut pivoter autour de deux axes disposés perpendiculairement l'un à l'autre, l'élément de réglage (46) faisant tourner ou coulisser parallèlement, par l'intermédiaire du joint universel (43), au moins deux pièces en céramique (40, 41) déplaçable l'une sur l'autre, avec des surfaces de contact étanche planes, et présentant des passages pour l'eau, les pièces (40, 41) étant accouplées cinématiquement aux mouvements du bec d'écoulement de l'eau (5), par l'intermédiaire du joint universel (43).

2. Robinet d'eau selon la revendication 1, caractérisé en ce que l'un des axes du joint universel (43) est parallèle à un axe de pivotement (42) du bec d'écoulement de l'eau (5), mais ne coïncide pas avec celui-ci.

3. Robinet d'eau selon la revendication 1, caractérisé en ce que le plan des surfaces de contact étanche des pièces (40, 41) (disques en céramique) est perpendiculaire à l'un des axes de pivotement (42) du bec d'écoulement de l'eau.

4. Robinet d'eau selon la revendication 1, caractérisé en ce que l'une des deux pièces (40 ou 41) est mobile en rotation autour de l'axe de pivotement (42) du bec d'écoulement de l'eau (5) et est accouplée à celui-ci.

5. Robinet d'eau selon la revendication 1, caractérisé en ce que le bec d'écoulement de l'eau (5) est relié, au moyen d'un élément de réglage (46), solidairement ou par complémentarité de formes, à une surface de contact étanche (47) de forme sensiblement hémisphérique, qui est entourée d'une enveloppe de guidage (45), l'élément de réglage (46) pouvant être orienté autour de l'axe de pivotement (42) dans une fente (48) de l'enveloppe de guidage (45).

6. Robinet d'eau selon la revendication 1, caractérisé en ce qu'au moins une partie du joint universel (42) est disposée à l'intérieur de la surface de contact étanche (47) de forme hémisphérique.

7. Robinet d'eau selon la revendication 1, caractérisé en ce qu'il est prévu un revêtement (52), qui recouvre en totalité ou en partie la fente (48).

8. Robinet d'eau selon la revendication 1, caractérisé en ce qu'il est disposé, entre le bec d'écoulement de l'eau (5) et les pièces mobiles (40, 41), au moins un taquet d'entraînement (49) avec un secteur libre (50).

9. Robinet d'eau selon l'une des revendications 1–8 qui précèdent, caractérisé en ce qu'il est prévu un cliquet élastique franchissable (51) dans le secteur de l'angle de pivotement (44) qui détermine le débit d'eau.

FIG 1

FIG 2

EP 0 200 895 B1

FIG. 3

FIG. 4          FIG 5

FIG 6          FIG 7

EP 0 200 895 B1